# EUROPÄISCHE PATENTSCHRIFT

(11) **EP 0 784 841 B1**
(45) Veröffentlichungstag und Bekanntmachung des Hinweises auf die Patenterteilung: **07.10.1998**
(21) Anmeldenummer: 94922787.0
(22) Anmeldetag: 03.08.1994
(51) Int. Cl.: G09B 21/00

(54) **VORRICHTUNG ZUR DARSTELLUNG VON FLÜCHTIGEN ERHABENHEITEN**
DEVICE FOR REPRESENTING CHANGEABLE RELIEF ITEMS
DISPOSITIF POUR LA REPRESENTATION D'ELEMENTS EN RELIEF CHANGEANTS

(43) Veröffentlichungstag der Anmeldung: 23.07.1997
(73) Patentinhaber: CARETEC GmbH, A-1010 Wien (AT)
(72) Erfinder: LITSCHEL, Dietmar, A-3400 Klosterneuburg (AT); SCHWERTNER, Christoph, A-2801 Katzelsdorf (AT)
(74) Vertreter: Babeluk, Michael, Dipl.-Ing. Mag., Patentanwälte Babeluk - Krause
(86) Internationale Anmeldenummer: AT9400106
(87) Internationale Veröffentlichungsnummer: WO9604637

(56) Entgegenhaltungen:
- WO-A-92/15079
- AT-B- 387 293
- DE-A- 2 845 436
- DE-A- 3 044 599
- DE-A- 3 834 442
- FR-A- 2 484 114
- DATABASE WPI Section PQ, Week 8935, 11. Oktober 1989 Derwent Publications Ltd., London, GB; Class P, AN 89-254676 & SU,A,1 460 734 (KORCHEMKIN V.M.)
- IBM TECHNICAL DISCLOSURE BULLETIN., Bd.28, Nr.3, August 1985, NEW YORK US Seiten 1343 - 1344 'Seeing Eye Mouse'

## Beschreibung

### FACHGEBIET DER ERFINDUNG

Die Erfindung betrifft eine Vorrichtung zur Darstellung von flüchtigen Erhabenheiten entsprechend dem Oberbegriff von Patentanspruch 1, siehe z.B. DE-A-3 044 599. Solche Vorrichtungen werden insbesondere als taktil erfaßbare Anzeigevorrichtungen verwendet, mit denen blinde Personen Informationen wahrnehmen können. Im allgemeinen wird dabei die Brailleschrift verwendet, bei der jeder Buchstabe des Alphabets durch eine Matrix von 2 x 3 oder 2 x 4 Punkten dargestellt wird, die gesetzt sind oder nicht gesetzt sind. Das Setzen eines Punktes erfolgt dadurch, daß der zugehörige Stift aus der zugehörigen Bohrung herausbewegt wird, wodurch er mit den Fingern erfaßbar ist. Die Erfindung betrifft jedoch gleichermaßen graphische Anzeigevorrichtungen, mit denen beliebige Muster, Bilder oder Darstellungen taktil erfaßbar wiedergegeben werden können. Bei solchen Anzeigen ist es auch möglich, unterschiedliche Stellungen der Stifte vorzusehen, so daß reliefartige Darstellungen möglich sind. Wesentlich ist, daß die Darstellung flüchtig ist, das heißt, daß die Anzeige beliebig verändert werden kann.

### STAND DER TECHNIK

Es sind Anzeigevorrichtungen bekannt, bei denen eine Stellung jedes Stiftes stabil ist, was beispielsweise dadurch bewirkt wird, daß dieser Stift durch eine Feder gegen einen Anschlag gedrückt wird. Durch Aktivieren einer Betätigungsvorrichtung, beispielsweise eines Elektromagnets, kann dieser Stift in seine andere Stellung gebracht werden, beispielsweise ausgefahren werden. Solange dieser Stift ausgefahren ist, muß die Betätigungsvorrichtung die Kraft auf den Stift ausüben, die ihn in dieser Stellung hält. Solche Vorrichtungen haben einen großen Energieverbrauch, und die auftretenden thermischen Probleme verursachen eine aufwendige Herstellung und Gestaltung dieser Vorrichtungen.

Weiters sind Anzeigevorrichtungen bekannt, die eine Verriegelungseinrichtung vorsehen, die den zugehörigen Stift in seiner an sich nicht stabilen Stellung hält. Solche Vorrichtungen sind mechanisch äußerst kompliziert, aufwendig in der Herstellung und fehleranfällig.

Aufgabe der Erfindung ist es, diese Nachteile zu vermeiden und eine Vorrichtung der eingangs beschriebenen Art zu schaffen, die einen einfachen Aufbau besitzt, einen geringen Energieverbrauch aufweist und dennoch ausreichende Haltekräfte für jeden Stift gewährleistet, die eine Abtastung mit dem Finger erlauben, ohne daß die Gefahr besteht, daß einzelne Stifte dadurch in eine andere Stellung gebracht werden, wodurch die dargestellte Information verfälscht wird.

### KURZE DARSTELLUNG DER ERFINDUNG

Diese Aufgaben werden durch die Merkmale des kennzeichnenden Abschnitts von Patentanspruch 1 gelöst. Im allgemeinen Fall besitzt jeder Stift eine Stellung, in der die Spitze des Stiftes im wesentlichen in der Ebene der Oberfläche der Lochplatte angeordnet ist und eine weitere Stellung, in der sie so weit hervorragt, daß sie für den Finger des Anwenders deutlich tastbar ist. Falls, wie oben erwähnt, eine reliefartige Darstellung notwendig ist, sind zusätzlich weitere Stellungen möglich, in denen der Stift unterschiedlich weit hervorragt. Wesentlich ist, daß der Stift in jeder der stabilen Stellungen durch magnetische Anziehungskräfte gehalten wird. Diese können zwischen einem Permanentmagnet und einem Weicheisenteil oder auch zwischen zwei Permantmagneten, die entsprechend gepolt sind, auftreten.

Als besonders günstig hat es sich herausgestellt, in jedem Stift axial magnetisierbare Abschnitte vorzusehen. Eine zugehörige Lochplatte wirkt dabei als Magnetjoch, um einen geschlossenen magnetischen Kreislauf herzustellen. Dadurch kann erreicht werden, daß der Stift in seinen stabilen Stellungen nur von den Magnetkräften gehalten wird, wobei er trotz der Stabilität der Stellung eine gewisse federnde Beweglichkeit in Axialrichtung aufweist. Dies hat sich als von den Anwendern besonders geschätztes Merkmal herausgestellt, das den Bedienungskomfort steigert.

In einer besonders bevorzugten Ausführungsvariante der vorliegenden Erfindung ist vorgesehen, daß jeder Stift mindestens zwei, vorzugsweise drei, in Axialrichtung permanent magnetisierte Abschnitte aufweist, die in Axialrichtung fluchtend hintereinander angeordnet sind und die durch Abschnitte aus Weicheisen voneinander getrennt sind. Die magnetisierten Abschnitte sind abwechselnd entgegengesetzt zueinander magnetisiert. Es ist eine weichmagnetische Lochplatte vorgesehen, die im Bereich jedes Stiftes zwei ringförmige Ausnehmungen aufweist, die so angeordnet sind, daß zumindest in einer stabilen Stellung des Stifts zwei magnetische Abschnitte des zugehörigen Stiftes im wesentlichen im Zentrum der beiden ringförmigen Ausnehmungen angeordnet sind. Dadurch wird eine besonders starke Haltekraft in der ausgefahrenen Stellung der Stifte dadurch erreicht, daß in dieser Stellung zwei permanent magnetisierte Abschnitte zwei magnetische Kreisläufe bilden. Der dritte Permanentmagnet dient dazu, die Kräfte der elektromagnetischen Betätigungsvorrichtung aufzunehmen.

Bei jeder Art von Anzeigevorrichtung ist das Löschen der gesamten Anzeige ein sehr häufig vorkommender Vorgang. Dieser Vorgang kann dadurch vereinfacht und beschleunigt werden, daß eine gemeinsame Stellvorrichtung vorgesehen ist, die auf alle Stifte gleichzeitig wirkt.

Eine besonders vorteilhafte Ausführungsvariante der Erfindung besteht darin, daß die Lochplatte als Stirnfläche einer zylindrischen Scheibe ausgebildet ist, wobei die einzelnen Stifte auf konzentrischen Kreisen angeordnet sind. Wenn sich diese Scheibe um ihren Mittelpunkt dreht, so gleiten die durch die Stifte dargestellten Zeichen, entsprechend der Drehung, unter der stillstehenden Hand des Anwenders hinweg. Dies ermöglicht einen besonderen Komfort bei der Benützung der Vorrichtung.

### KURZE BESCHREIBUNG DER ZEICHNUNGEN

Fig. 1 zeigt schematisch eine axonometrische Darstellung einer erfindungsgemäßen Vorrichtung;
Fig. 2 einen teilweisen Schnitt entlang einer Ebene nach Linie II-II in Fig. 1, die durch die Achsen eines Teils der Stifte aufgespannt wird;
Fig. 3 eine weitere Ausführungsvariante der Erfindung im Schnitt;
Fig. 4 eine dritte Ausführungsvariante der Erfindung im Schnitt;
Fig. 5 eine vierte Ausführungsvariante der Erfindung im Schnitt;
Fig. 6 eine abgeänderte Ausführung der Stifte;
Fig. 7 eine Ansicht einer Ausführungsvariante der erfindungsgemäßen Vorrichtung von oben;

### DETAILLIERTE BESCHREIBUNG DER BEVORZUGTEN AUSFÜHRUNGSVARIANTEN

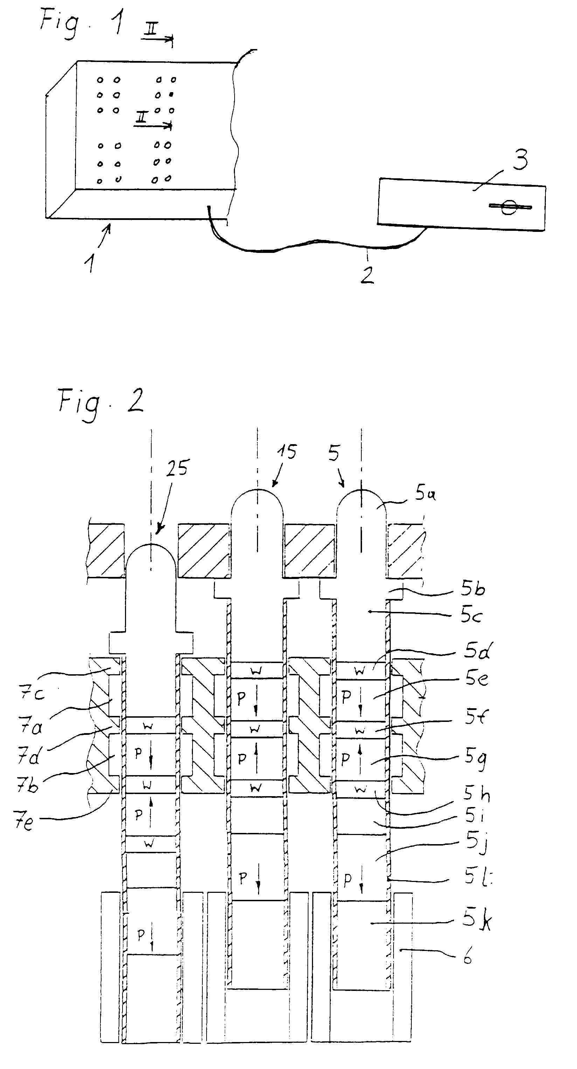

Die in Fig. 1 schematisch dargestellte erfindungsgemäße Vorrichtung 1 ist über ein Kabel 2 mit einem Computer 3 verbunden. Dieser steuert die Vorrichtung 1 als Ausgabeeinheit an, wie etwa einen Bildschirm. Der Computer 3 kann dabei die Steuervorrichtung darstellen.

In Fig. 2 ist eine erste Ausführungsvariante in einem Teilschnitt detaillierter dargestellt. Die obere Abdeckung der Vorrichtung 1 wird von einer Lochplatte 4 gebildet, durch die Stifte 5, 15 und 25 hindurch ragen. Jeder Stift 5, 15, 25 besteht aus einem Kopf 5a, einem Vorsprung 5b, einem oberen Schaftabschnitt 5c, einem ersten Weicheisenabschnitt 5d, einem ersten Permanentmagnet 5e, einem zweiten Weicheisenabschnitt 5f, einem zweiten Permamentmagnet 5g, einem dritten Weicheisenabschnitt 5h, einem Distanzstück 5i, einem dritten Permamentmagnet 5j und einem unteren Schaftabschnitt 5k. Diese Teile sind in Axialrichtung nacheinander angeordnet und miteinander beispielsweise durch Klebung verbunden. Der Kopf 5a, der Vorsprung 5b, das Distanzstück 5i, sowie der obere und der untere Schaftabschnitt 5c und 5k sind aus nichtmagnetischem Material, beispielsweise Kunststoff oder Buntmetall, gefertigt. Die Teile unterhalb des Vorsprunges 5b werden zusätzlich durch eine Hülse 51 eingeschlossen, die ebenfalls aus Kunststoff oder Buntmetall hergestellt ist. Wie in der Fig. 2 durch Pfeile dargestellt, sind der erste Permanentmagnet 5e und der dritte Permanentmagnet 5j in der gleichen Richtung magnetisiert, wogegen der zweite Permanentmagnet 5g in die entgegengesetzte Richtung polarisiert ist.

Die Stifte 5, 15 und 25 sind in Axialrichtung zwischen zwei Endstellungen beweglich, wobei in der oberen Endstellung der Vorsprung 5b an der Unterseite der Lochplatte 4 anliegt und durch die Magnetkraft eine gewisse Vorspannung erzeugt wird. In einer alternativen Ausführungsvariante kann jedoch vorgesehen sein, daß in der oberen Endstellung ein gewisser Spalt zwischen dem Vorsprung 5b und der Lochplatte 4 besteht, so daß sich der Stift 5, 15, 25 in einem gewissen Ausmaß frei um seine Endstellung bewegen kann, ohne diese zu verlassen. Die weichmagnetische Lochplatte 7 ist aus einem magnetisierbaren Material, wie etwa Weicheisen, aufgebaut. Im Bereich jeder Bohrung der Lochplatte 7 sind zwei ringförmige Ausnehmungen 7a und 7b vorgesehen, die durch Vorsprünge 7c, 7d und 7e begrenzt sind. Der Abstand zwischen den Vorsprüngen 7c und 7d bzw. 7d und 7e in Axialrichtung entspricht im wesentlichen dem Abstand zwischen dem ersten Weicheisenabschnitt 5d und dem zweiten Weicheisenabschnitt 5f bzw. dem zweiten Weicheisenabschnitt 5f und dem dritten Weicheisenabschnitt 5h. Das Ausmaß der möglichen Axialverschiebung der Stifte 5, 15 und 25 ist so abgestimmt, daß in der oberen Endstellung, die in Fig. 2 durch die Stifte 5 und 15 dargestellt ist, zwei magnetische Kreisläufe gebildet werden. Der erste Permanentmagnet 5e bildet einen magnetischen Kreislauf um die ringförmige Ausnehmung 7a, und der zweite Permanentmagnet 5g bildet einen magnetischen Kreislauf um die zweite Ausnehmung 7b. In der unteren Endstellung, die in Fig. 2 durch den Stift 25 dargestellt ist, bildet der erste Permanentmagnet 5e einen magnetischen Kreislauf um die zweite Ausnehmung 7b.

In beiden Endstellungen befinden sich daher die Weicheisenabschnitte 5d und 5f etwa auf gleicher Höhe und gegenüberliegend zu den Vorsprüngen 7c, 7d bzw. 7e. Eine Bewegung des Stiftes in Axialrichtung vergrößert den magnetischen Spalt zwischen diesen Teilen und ist daher nur gegen den Widerstand der magnetischen Kräfte möglich. Daher werden die Stifte 5, 15, 25 stabil in diesen Stellungen gehalten.

Unterhalb der weichmagnetischen Lochplatte 7 ist im Bereich jedes Stiftes 5, 15, 25 ein Elektromagnet 6 vorgesehen, durch dessen Aktivierung der dritte Permanentmagnet 5j angezogen oder abgestoßen werden kann. Durch entsprechende Ansteuerung dieser Elektromagnete 6 ist es daher möglich, die Stifte 5, 15, 25 in die jeweils andere Stellung zu bringen.

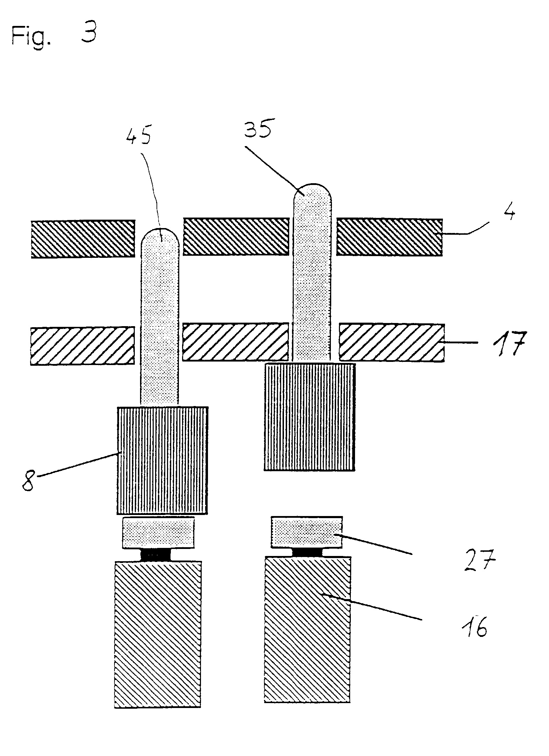

In Fig. 3 ist eine vereinfachte Ausführungsvariante der Erfindung dargestellt. An der Unterseite der Stifte 35 und 45 sind Permanentmagnete 8 angebracht. In der oberen Endstellung des Stiftes 35 begrenzt eine weichmagnetische Lochplatte 17 die Bewegung des Stiftes. Durch die entsprechende Anziehungskraft ist diese Stellung stabil. In der unteren Endstellung des Stiftes 45 ist der Permanentmagnet 8 von einer Weicheisenplatte 27 angezogen und festgehalten. Unterhalb der Weicheisenplatte 27 ist ein Elektromagnet 16 zur Steuerung des Stiftes 35, 45 vorgesehen.

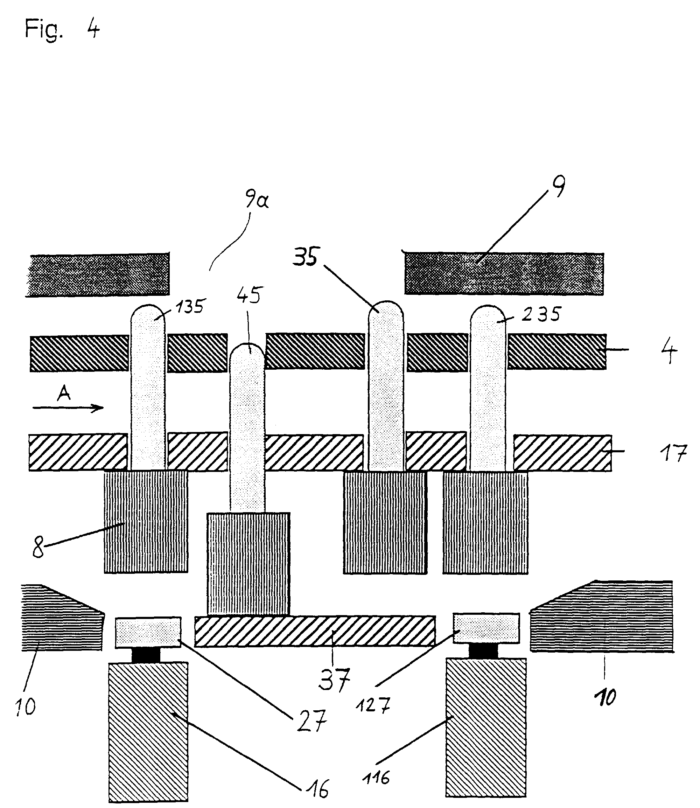

Fig. 4 ist eine Erweiterung der Ausführungsvariante von Fig. 3, bei der die Baugruppe, die aus den Stiften 35, 45 samt Permanentmagneten 8 der Lochplatte 4 und der weichmagnetischen Lochplatte 17 besteht, in einer Richtung parallel zur Oberfläche der Lochplatte 4 beweglich angeordnet ist. Diese Bewegung kann translatorisch oder eine Rotationsbewegung sein. Oberhalb der Stifte 35, 45 ist eine Abdeckplatte 9 vorgesehen, die ein Ablesefenster 9a aufweist, durch das die Stellung eines Teils der Stifte 35, 45 abgetastet werden kann. Die "nicht sichtbaren" Stifte unterhalb der Abdeckplatte 9 sind bei dieser Ausführungsvariante stets in ihrer oberen Endstellung. Umgekehrt kann die Vorrichtung auch so ausgebildet sein, daß die Stifte nach dem Verlassen des Ablesefensters in ihre untere Endstellung gebracht werden. Bevor ein Stift das Ablesefenster 9a erreicht, wird er, falls erforderlich, vom Elektromagnet 16 nach unten gezogen. Bei einer Bewegung der Stifte in Richtung des Pfeiles A bedeutet dies, daß der Stift 135 gegebenenfalls durch den Elektromagnet 16 nach unten zu ziehen ist. Nach dem Verlassen des Anzeigefensters 9a kann der Stift 235, falls er in der unteren Endstellung wäre, durch den Elektromagnet 116 wieder in seine obere Endstellung gebracht werden. Dies ist jedoch nicht erforderlich, da eine keilförmige Rampe 10 vorgesehen ist, die die in ihrer unteren Endstellung befindlichen Stifte automatisch in die obere Endstellung bringt. Der Elektromagnet 116 ist jedoch wesentlich, wenn die Lochplatte 4 in die entgegengesetzte Richtung, gegen den Pfeil A bewegt werden soll. Durch diese Ausführungsvariante ist es möglich, eine Vielzahl von Stiften mit lediglich einem bzw. zwei Elektromagneten 16, 116 zu betätigen.

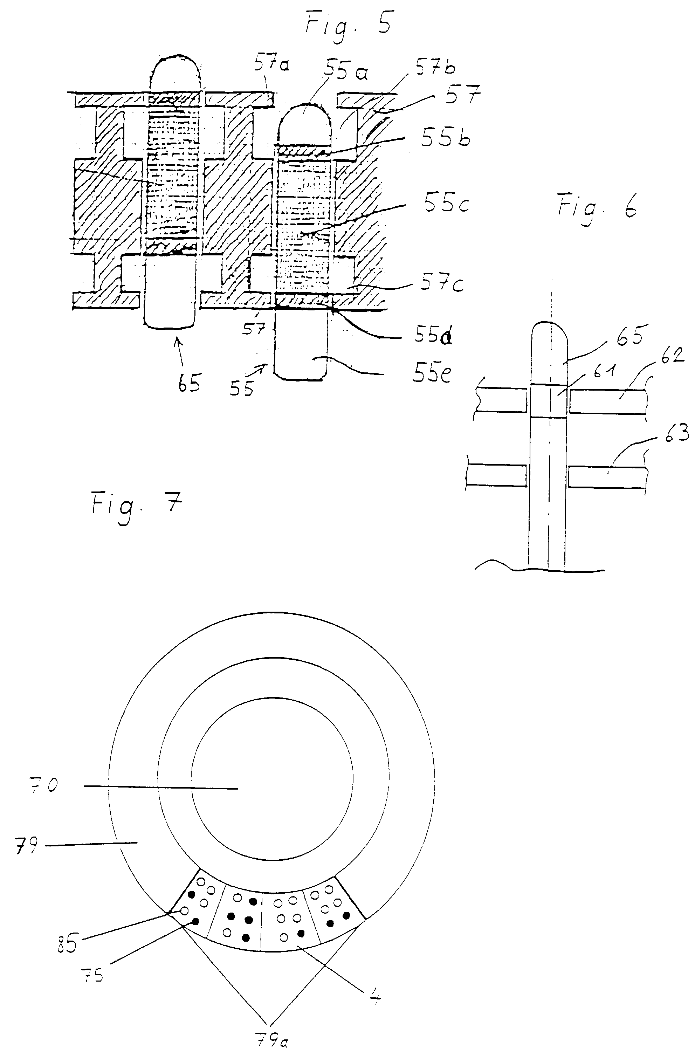

Fig. 5 zeigt eine Ausführungsvariante, die eine Abwandlung der Ausführungsvariante von Fig. 2 darstellt, jedoch wesentlich vereinfacht ist. Der Stift 55 besteht dabei aus einer Spitze 55a aus Kunststoff, einem oberen Weicheisenabschnitt 55b, einem Permanentmagnet 55c, einem unteren Weicheisenabschnitt 55d und einem Schaft 55e. Es ist lediglich eine einzige Lochplatte 57 vorgesehen, deren Oberfläche gleichzeitig die obere Abdeckung der Vorrichtung bildet. Der obere Weicheisenabschnitt 55b ist in der oberen Endstellung einem Vorsprung 57a der Lochplatte 57 gegenüberliegend angeordnet. In der unteren Endstellung ist der untere Weicheisenabschnitt 55d einem Vorsprung 57d der Lochplatte 57 gegenüberliegend angeordnet. Ein Elektromagnet zur Betätigung der Stifte 55, 65 ist unterhalb der Lochplatte 57 vorgesehen, jedoch nicht dargestellt. Ausnehmungen 57b und 57c dienen zur Herstellung der magnetischen Kreisläufe wie bei der Ausführungsvariante von Fig. 2.

Fig. 6 zeigt eine weitere Ausführungsvariante, bei der die Stifte 65 mindestens einen Magnetabschnitt 61 aufweisen. Weiters sind Magnetplatten 62 und 63 vorgesehen, die mit dem Magnetabschnitt 61 zusammenwirken. Bei dieser Ausführungsvariante können der Magnetabschnitt 61 permanentmagnetisch sein und die Magnetplatten 62 und 63 weichmagnetisch oder umgekehrt. Es können auch alle diese Teile Permanentmagnete sein, wobei dann wesentlich ist, daß die in den Endstellungen wirkenden Kräfte Anziehungskräfte sind. Die Magnetisierungsrichtung kann dabei quer zur Axialrichtung der Stifte 65 sein.

In der Fig. 7 ist eine besonders ergonomische Ausführungsvariante der Erfindung dargestellt. Die Betätigung der Stifte 75 (gesetzt) und 85 (nicht gesetzt) kann dabei nach einer der oben beschriebenen Varianten erfolgen. An der Oberseite der Vorrichtung ist eine Stützfläche 70 für die Hand des Anwenders vorgesehen, an deren Umfang eine Abdeckung 79 angeordnet ist. Diese Abdeckung 79 besitzt ein Anzeigefenster 79a in der Form eines Kreisringabschnittes. Unterhalb der Abdeckung 79 ist eine Lochplatte 4 drehbar angeordnet, durch deren Bohrungen die Stifte 75, 85 ragen. Im Bereich des Anzeigefensters 79a ist der Zustand der Stifte 75, 85 abtastbar. Ansonsten sind diese von der Abdeckung 79 verdeckt. Auf diese Weise gleitet die abzulesende Information unter der im wesentlichen unbewegten Hand des Anwenders hinweg, wobei vorgesehen sein kann, daß die Drehgeschwindigkeit der Lochplatte 4 vom Anwender beeinflußbar ist.

## Patentansprüche

1. Vorrichtung zur Darstellung von flüchtigen Erhabenheiten, umfassend:
- eine Lochplatte (4) mit einer Vielzahl von Bohrungen;
- mindestens einen Stift (5, 15, 25, 25, 35, 45, 55, 65, 75, 85), der durch eine Bohrung der Lochplatte (4) ragt und der in Axialrichtung beweglich ist; und
- eine elektromagnetische Betätigungsvorrichtung zum Bewegen des Stiftes (5, 15, 25, 25, 35, 45, 55, 65, 75, 85);
dadurch gekennzeichnet, daß die Lochplatte (4) im wesentlichen kreiszylindrisch ausgebildet ist und um die Zylinderachse drehbar ist, daß die Stifte (5, 15, 25, 25, 35, 45, 55, 65, 75, 85) mindestens zwei stabile Stellungen aufweisen, in denen sie vorzugsweise durch die Kraft eines Permanentmagnets (5e, 5g, 5j, 8, 55c, 67) gehalten werden, und daß die Stifte auf einer Stirnfläche der einen beweglichen Zylinder bildenden Lochplatte entlang von konzentrischen Kreisen angeordnet sind.

2. Vorrichtung nach Anspruch 1, dadurch gekennzeichnet, daß eine gemeinsame Stellvorrichtung (10) vorgesehen ist, die es ermöglicht, eine Mehrzahl von Stiften (35, 45) durch einen einzelnen Betätigungsvorgang in eine bestimmte stabile Stellung zu bringen.

3. Vorrichtung nach Anspruch 2, dadurch gekennzeichnet, daß die gemeinsame Stellvorrichtung aus einer Lochplatte besteht, die in Axialrichtung der Stifte beweglich ist und die mit Vorsprüngen an den Stiften zusammenwirkt, um die in den Bohrungen der Lochplatte angeordneten Stifte in Axialrichtung verschieben zu können.

4. Vorrichtung nach Anspruch 2, dadurch gekennzeichnet, daß die gemeinsame Stellvorrichtung aus einem Schlitten besteht, der bei einer Bewegung quer zur Axialrichtung der Stifte diese in eine bestimmte Stellung bringt.

5. Vorrichtung nach einem der Ansprüche 1 bis 4, dadurch gekennzeichnet, daß eine Feder (60) vorgesehen ist, die auf den zugehörigen Stift (65) eine Kraft in Axialrichtung ausübt.

## Claims

1. A device for representing relief items, comprising:
- a perforated plate (4) with a plurality of drillings;
- at least one pin (5, 15, 25, 25, 35, 45, 55, 65, 75, 85) projecting through a drilling in the perforated plate (4) and being axially movable; and
- an electromagnetic actuator to move the pin (5, 15, 25, 25, 35, 45, 55, 65, 75, 85);
characterized in that the perforated plate (4) is substantially arranged circular cylindrical and is rotatable about the cylinder axis, that the pins (5, 15, 25, 25, 35, 45, 55, 65, 75, 85) are provided with at least two stable positions in which they are preferably held by the force of a permanent magnet (5e, 5g, 5j, 8, 55c, 67) and that the pins are arranged on the face side of a perforated plate forming a movable cylinder along concentric circles.

2. A device as claimed in claim 1, characterized in that a common actuator (10) is provided which allows bringing a plurality of pins (35, 45) into a certain stable position by a single actuation process.

3. A device as claimed in claim 2, characterized in that the common actuator consists of a perforated plate which is movable in the axial direction of the pins and co-operates with projections on the pins so as to be able to displace in the axial direction the pins arranged in the drillings of the perforated plate.

4. A device as claimed in claim 2, characterized in that the common actuator consists of a carriage which in the case of a movement transversally to the axial direction of the pins brings the same into a specific position.

5. An apparatus as claimed in one of the claims 1 to 4, characterized in that a spring (60) is provided which exercises a force in the axial direction on the associated pin (65).

## Revendications

1. Dispositif pour représenter un relief transitoire, comprenant :
- une plaque perforée (4), avec une pluralité de trous;
- au moins une broche (5, 15, 25, 25, 35, 45, 55, 65, 75, 85) qui fait saillie par un trou dans la plaque trouée et qui est mobile dans la direction axiale; et
- un dispositif de commande électromagnétique pour déplacer les broches (5, 15, 25, 25, 35, 45, 55, 65, 75, 85),
caractérisé en ce que la plaque à trous (4) est réalisée sous une forme essentiellement cylindrique circulaire pouvant tourner autour de l'axe du cylindre, en ce que les broches (5, 15, 25, 25, 35, 45, 55, 65, 75, 85) peuvent se placer dans au moins deux positions stables, dans lesquelles elles sont maintenues, de préférence par la force d'un aimant permanent (5e, 5g, 5j, 8, 55c, 67) et en ce que les broches sont disposées sur la surface frontale de la plaque mobile constituant un cylindre suivant des cercles concentriques.

2. Dispositif selon la revendication 1, caractérisé en ce que l'on prévoit un dispositif d'actionnement commun (10) qui permet d'amener une pluralité de broches (35, 45) en une position déterminée stable, en une seule opération de commande.

3. Dispositif selon la revendication 2, caractérisé en ce que le dispositif d'actionnement commun est constitué par une plaque trouée, qui est mobile dans la direction axiale dee broches et qui coopère avec des parties saillantes sur les broches, pour pouvoir déplacer suivant la direction axiale les broches disposées dans les trous de la plaque perforée.

4. Dispositif selon la revendication 2, caractérisé en ce que le dispositif d'actionnement commun est constitué par un coulisseau qui amène les broches dans une position prédéterminée par un mouvement perpendiculaire à la direction axiale.

5. Dispositif selon l'une des revendications 1 à 4, caractérisé en ce qu'un ressort (60) est prévu pour exercer une force dans la direction axiale sur la broche respective (65).
